# EUROPEAN PATENT SPECIFICATION

(11) **EP 3 828 699 B1**
(45) Date of publication and mention of the grant of the patent: **20.03.2024**
(21) Application number: 20201466.8
(22) Date of filing: 13.10.2020
(51) Int. Cl.: G06F 9/4401, G06F 9/455

(54) **INFORMATION PROCESSING DEVICE, MANAGEMENT PROGRAM, MANAGEMENT METHOD, AND INFORMATION PROCESSING SYSTEM**
INFORMATIONSVERARBEITUNGSVORRICHTUNG, VERWALTUNGSPROGRAMM, VERWALTUNGSVERFAHREN UND INFORMATIONSVERARBEITUNGSSYSTEM
DISPOSITIF DE TRAITEMENT D'INFORMATIONS, PROGRAMME DE GESTION, PROCÉDÉ DE GESTION ET SYSTÈME DE TRAITEMENT D'INFORMATIONS

(30) Priority: 29.11.2019 JP 2019216983
(43) Date of publication of application: 02.06.2021
(73) Proprietor: Omron Corporation, Kyoto-shi, Kyoto 600-8530 (JP)
(72) Inventor: Yoshikawa, Tetsuo, Kizugawa-shi Kyoto, 619-0283 (JP)
(74) Representative: Horn Kleimann Waitzhofer Schmid-Dreyer Patent- und Rechtsanwälte PartG mbB

(56) References cited:
- US-A1- 2004 199 599
- US-A1- 2009 249 354
- US-A1- 2014 359 356

## Description

### CROSS-REFERENCES TO RELATED APPLICATIONS

This application claims priority to Japanese Patent Application No. 2019-216983 filed November 29, 2019.

### FIELD

The present invention relates to an information processing device, a management program, a management method, and an information processing system.

### BACKGROUND

A virtualization system is known as a known technique. For example, JP 2017-187992A discloses that a virtual environment can be realized in which a plurality of OSs are executable independently to each other using a shared hardware resource, in a control device including at least one processor.

JP 2017-187992A, JP 5664004B, JP 6029165B, and JP 5206750B are examples of background art.

However, when the virtualization system is shut down, next processing (such as shutdown of another guest OS) is performed following a set time schedule, without confirming whether or not a guest OS has been shut down (see JP 5664004B and JP 6029165B, for example).

Therefore, in the verification at the time of system construction, there is a problem in that it is not possible to confirm whether or not a guest OS has been shut down, and the next processing cannot be performed until a set time has elapsed, and therefore time is wasted in the verification. Also, there is a problem in that if it took a longer time to shut down a guest OS than estimated, the guest OS is not properly shut down.

Also, the shutdown of a guest OS is regarded as completed when a set time has elapsed, and the coupling between a virtual OS (hypervisor), a virtual storage, and the like is released.

Note that, in JP 5206750B, a configuration in which a power supply device supplies power to a virtual host computer via a tap is disclosed.
US 2014/0359356 A1 discloses that a plurality of virtual machines are caused to perform their shutdown processes in parallel. A control unit selects a first virtual machine from the plurality of virtual machines with reference to the storage unit. In addition, the control unit selects a second virtual machine from virtual machines with lower priority level than the first virtual machine with reference to the storage unit. The control unit then reduces the amount of resources allocated to the selected second virtual machine and increases the amount of resources allocated to the first virtual machine using resources equivalent to the reduced amount of resources.

### SUMMARY

One aspect of the present invention aims to provide a technique for appropriately performing the shutdown of a virtualization system.

In order to solve the above problem, an information processing device according to independent claim 1 is provided.

According to the above-described configuration, when the shutdown of one of a plurality of guest OSs, or virtual machines, that operates on a virtual OS, or a hypervisor, is completed, shutdown of another guest OS is executed, and when all of the plurality of guest OSs are shut down, the information processing device is shut down, and as a result, the virtualization system can be appropriately shut down.

In the information processing device according to one aspect of the invention, the control unit may include a third management unit that monitors the statuses of the plurality of guest OSs and control the plurality of guest OSs, and the first management unit may acquire status information of each of the plurality of guest OSs via the third management unit, and execute shutdown of the plurality of guest OSs via the third management unit.

According to the above-described configuration, the shutdown of the plurality of guest OSs is executed by acquiring status information of each of the plurality of guest OSs, and as a result, the plurality of guest OSs can be appropriately shut down.

In the information processing device according to one aspect of the invention, the second management unit, when all of the plurality of guest OSs are shut down by the first management unit, may shut down the information processing device via a control device that controls the information processing device and an uninterruptible power supply device connected to the information processing device.

According to the above-described configuration, as a result of interposing a control device that controls the information processing device and the uninterruptible power supply device connected to the information processing device, the information processing device can be appropriately shut down.

The information processing device according to one aspect of the invention may have a test mode in which the plurality of guest OSs are shut down following a predetermined order.

According to the above-described configuration, as a result of providing a test mode in which the plurality of guest OSs are shut down following a predetermined order, shutdown of guest OSs in a various order can be tried.

The information processing device according to one aspect of the invention may further include a display control unit configured to generate screen data for displaying a shutdown time of each guest OS in the test mode.

According to the above-described configuration, the shutdown time of each guest OS in the test mode is displayed, and as a result, the appropriate order of shutdown of the guest OSs can be examined.

In the information processing device according to one aspect of the invention, the screen data may further include: an accumulated time of the shutdown time of each guest OS; an item indicating whether or not each guest OS has been successfully shut down; and a time limit of the accumulated time.

According to the above-described configuration, an accumulated time of the shutdown time of each guest OS, an item indicating whether or not each guest OS has been successfully shut down, and a time limit of the accumulated time, in the test mode, are further displayed, and as a result, the more appropriate order of shutdown of the guest OSs can be examined.

A management program according to one aspect of the invention is a management program according to the independent management program claim.

A management method according to one aspect of the invention is a management method according to the independent management method claim.

An information processing system according to one aspect of the invention is an information processing system that includes an information processing device, an uninterruptible power supply device, and a control device, wherein the information processing device is the information processing device according to independent claim 1, the uninterruptible power supply device is connected to the information processing device, and the control device controls the information processing device and the uninterruptible power supply device.

An information processing system according to one aspect of the invention is an information processing system that includes a plurality of information processing devices, wherein the plurality of information processing devices each includes a control unit, at least one information processing device is the information processing device according to independent claim 1.

The information processing device according to aspects of the present invention may be realized using a computer, and in this case, a control program for an information processing device that realizes the information processing device on a computer by causing the computer to operate as the units (software elements) included in the information processing device, and a computer-readable storage medium storing the control program also fall within the scope of the present invention.

According to one aspect of the invention, the shutdown of a virtualization system can be appropriately performed.

### BRIEF DESCRIPTION OF THE DRAWINGS

FIG. 1 is a diagram illustrating a configuration of an information processing system according to Embodiment 1 of the present invention.
FIG. 2 is a diagram illustrating an outline of a virtual software according to Embodiment 1 of the present invention.
FIG. 3 is a diagram illustrating a detailed configuration of the virtual software and a configuration of a periphery according to Embodiment 1 of the present invention.
FIG. 4 is a block diagram illustrating a configuration of a UPS according to Embodiment 1 of the present invention.
FIG. 5 is a block diagram illustrating a configuration of a network card according to Embodiment 1 of the present invention.
FIG. 6 is a flowchart illustrating processing of a server according to Embodiment 1 of the present invention.
FIG. 7 is a flowchart illustrating processing of a network card according to Embodiment 1 of the present invention.
FIG. 8 is a diagram illustrating a display screen of a node list according to Embodiment 2 of the present invention.
FIG. 9 is a diagram illustrating a screen for displaying a shutdown time and the like of each virtual machine in a stoppage test according to Embodiment 2 of the present invention.
FIG. 10 is a diagram illustrating a screen for setting a timeout time of each node according to Embodiment 2 of the present invention.
FIG. 11 is a diagram illustrating a screen for executing a startup test according to Embodiment 2 of the present invention.
FIG. 12 is a diagram illustrating a screen for setting a startup priority according to Embodiment 2 of the present invention.
FIG. 13 is a diagram illustrating a setting screen regarding a UPS according to Embodiment 2 of the present invention.
FIG. 14 is a diagram illustrating a setting screen regarding a management software according to Embodiment 2 of the present invention.
FIG. 15 is a diagram illustrating a script management screen according to Embodiment 2 of the present invention.
FIG. 16 is a diagram illustrating a basic setting screen according to Embodiment 2 of the present invention.

### DETAILED DESCRIPTION

### Embodiment 1

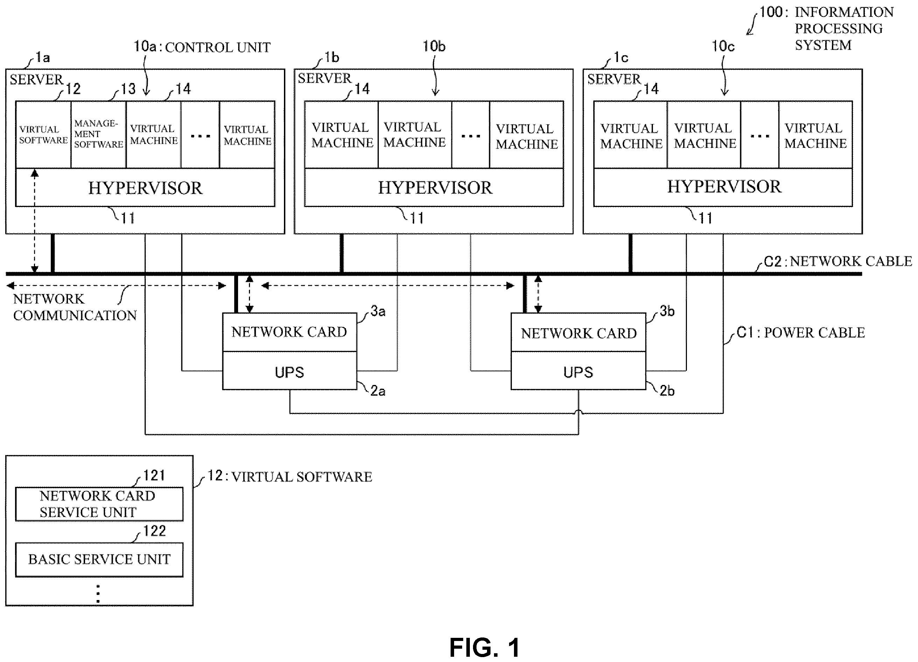

Hereinafter, embodiments according to one aspect of the present invention (hereinafter, also denoted as the "present embodiment") will be described based on FIGS. 1 to 7. Note that the same or corresponding portions are assigned the same reference numerals in the drawings, and descriptions thereof will be omitted. The present embodiment will be described taking an information processing system 100 as a representative example of the virtualization system, for example. In order to facilitate the understanding of a server 1 according to one aspect of the present invention, first, an outline of the information processing system 100 will be described using FIG. 1.

### 1. Application example

### Configuration of information processing system 100

FIG. 1 is a diagram illustrating a configuration of the information processing system 100 according to the present embodiment. As shown in FIG. 1, the information processing system 100 is a virtualization system that includes the servers 1, UPSs (Uninterruptible Power Supply) 2, and network cards 3.

The servers 1 are information processing devices, and three servers 1a, 1b, and 1c are shown in FIG. 1, but the number of servers is not specifically limited. The UPSs 2 are uninterruptible power supply devices, and two UPSs 2a and 2b are shown in FIG. 1, but the number of UPSs is not specifically limited. The network cards 3 are control devices for controlling the servers 1 and the UPSs 2, and two network cards 3a and 3b are shown in FIG. 1, but the number of network cards is not specifically limited.

The servers 1a, 1b, and 1c are connected to the UPSs 2a and 2b through power cables C1, and are supplied with power therefrom. The servers 1a, 1b, and 1c are connected through a network cable C2 so as to be able to communicate to each other. Also, the servers 1a, 1b, and 1c are connected to the network cards 3a and 3b through the network cable C2 so as to be able to perform communication. The network card 3a is inserted into a slot in a back side of the UPS 2a. The network card 3b is inserted into a slot in a back side of the UPS 2b.

### 2. Exemplary configuration

### Configuration of server 1

As shown in FIG. 1, the server 1a includes a control unit 10a, and includes a hypervisor 11, virtual software 12, management software 13, and virtual machines 14, as the software to be executed by the control unit 10a. The servers 1b and 1c respectively include control units 10b and 10c, and each include a hypervisor 11 and virtual machines 14 that are software programs to be executed by the control units 10b and 10c. Note that the control unit 10a of the server 1a may also be configured to not include the virtual machines 14.

The hypervisor 11 is a virtual OS that integrally manages other pieces of software in each server, and may be AHV of Nutanix (registered trademark), ESXi of VMware (registered trademark), or the like. The virtual software 12 is software for controlling shutdown of the servers 1. The management software 13 is software for monitoring the states of virtual machines 14 by communicating with the virtual machines 14 of each server, and may be Prism of Nutanix, vCSA of VMware, or the like. The virtual machine 14 is a guest OS, and may be Linux (registered trademark), Windows (registered trademark), or the like.

The virtual software 12, the management software 13, and the virtual machines 14 operate under the management of the hypervisor 11. The virtual software 12 acquires the state of a virtual machine 14 using an API (Application Programming Interface) of the management software 13, and gives an instruction to shut down the virtual machine 14.

### Configuration of virtual software 12

As shown in FIG. 1, the control unit 10a includes, as the virtual software 12, a basic service unit (first management unit) 122 that manages shutdown of a plurality of virtual machines 14 that operates on the hypervisor 11, and a network card service unit (second management unit) 121 that shuts down the server 1a when all of the plurality of virtual machines 14 are shut down by the basic service unit 122. The basic service unit 122, upon acquiring information indicating that the shutdown of the plurality of virtual machines 14 is completed, executes shutdown of a virtual machine 14 other than that one virtual machine 14.

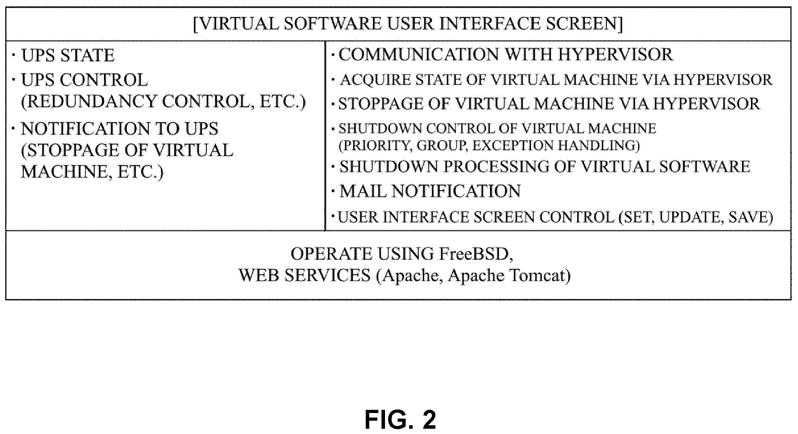

FIG. 2 is a diagram illustrating an outline of the virtual software 12 according to the present embodiment. The virtual software 12 generates a user interface screen, and displays the user interface screen on a display. Items as shown in FIG. 2 are displayed on the user interface screen, and a user can refer to the states at this point in time. That is, on the user interface screen, items relating to the states of the UPSs 2, control of the UPSs 2 (such as redundancy control), notifications to the UPSs 2 (such as stoppage of a virtual machine), communication with the hypervisors 11, the states of the virtual machines 14 via the hypervisors 11, stoppages of the virtual machines 14 via the hypervisors 11, shutdown control (priority, group, exception handling) of the virtual machine 14, shutdown processing of the virtual software 12, mail notifications, and user interface screen control (setting, updating, saving), are displayed, for example.

Note that the virtual software 12 operates using Free BSD, Web services (Apache, Apache Tomcat), or the like.

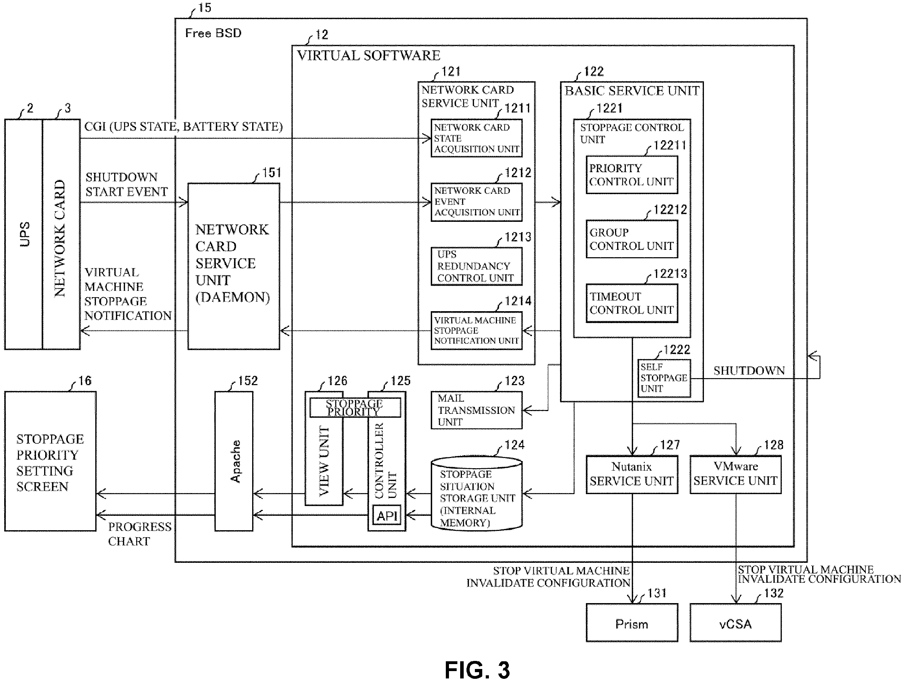

FIG. 3 is a diagram illustrating a detailed configuration of the virtual software 12 and a configuration of a periphery according to the present embodiment. As shown in FIG. 3, the virtual software 12, a network card service unit (daemon) 151, and Apache 152 operate on Free BSD 15.

The virtual software 12 includes the network card service unit 121, the basic service unit 122, a mail transmission unit 123, a stoppage situation storage unit 124, a controller unit 125, a view unit 126, a Nutanix service unit 127, and a VMware service unit 128.

The network card service unit 121 communicates with a network card 3. The network card service unit 121 includes a network card state acquisition unit 1211, a network card event acquisition unit 1212, a UPS redundancy control unit 1213, and a virtual machine stoppage notification unit 1214.

The network card state acquisition unit 1211 acquires the state of a UPS 2 and the battery condition from the network card 3 via a CGI (Common Gateway Interface). The network card event acquisition unit 1212 acquires a shutdown start event from the network card 3 via the network card service unit (daemon) 151. The UPS redundancy control unit 1213 controls the redundancy of the UPS 2 to which the server 1 is connected. The virtual machine stoppage notification unit 1214 accepts a notification (virtual machine stop notification) indicating that a virtual machine 14 has stopped from the basic service unit 122. Also, the virtual machine stoppage notification unit 1214 transmits a virtual machine stoppage notification to the network card 3 via the network card service unit (daemon) 151.

The basic service unit 122 includes a stoppage control unit 1221 and a self stoppage unit 1222. The stoppage control unit 1221 includes a priority control unit 12211, a group control unit 12212, and a timeout control unit 12213. The stoppage control unit 1221 instructs Prism 131, which is one program of the management software 13, to stop a virtual machine 14 and invalidate the virtualization configuration via the Nutanix service unit 127. Also, the stoppage control unit 1221 instructs vCSA 132, which is one program of the management software 13, to stop a virtual machine 14 and invalidate the virtualization configuration via the VMware service unit 128.

The self stoppage unit 1222 shuts down the Free BSD 15.

The mail transmission unit 123 acquires the stoppage situations of the virtual machines 14 from the basic service unit 122 and transmits a mail including the stoppage situations of the virtual machines 14 to the user, as needed. The stoppage situation storage unit 124 acquires the stoppage situations of the virtual machines 14 from the basic service unit 122 and stores the stoppage situations. The controller unit 125 acquires the stoppage situations of the virtual machines 14 from the stoppage situation storage unit 124, and displays a progress chart in a stoppage priority setting screen 16 through the view unit 126 and the Apache 152, or through the Apache 152.

### Virtual software 12 and management software 13

The management software (third management unit) 13 of the control unit 10a monitors the statuses of the plurality of virtual machines 14, and controls the plurality of virtual machines 14. The basic service unit 122 of the virtual software 12 acquires the status information of each of the plurality of virtual machines 14 via the management software 13, and executes shutdown of the plurality of virtual machines 14 via the management software 13.

Also, the network card service unit 121 of the virtual software 12 shuts down the servers 1 via the network cards 3 that controls the servers 1 and the UPSs 2 that are connected to the servers 1, when all of the plurality of virtual machines 14 are shut down by the basic service unit 122.

### Configuration of UPS 2

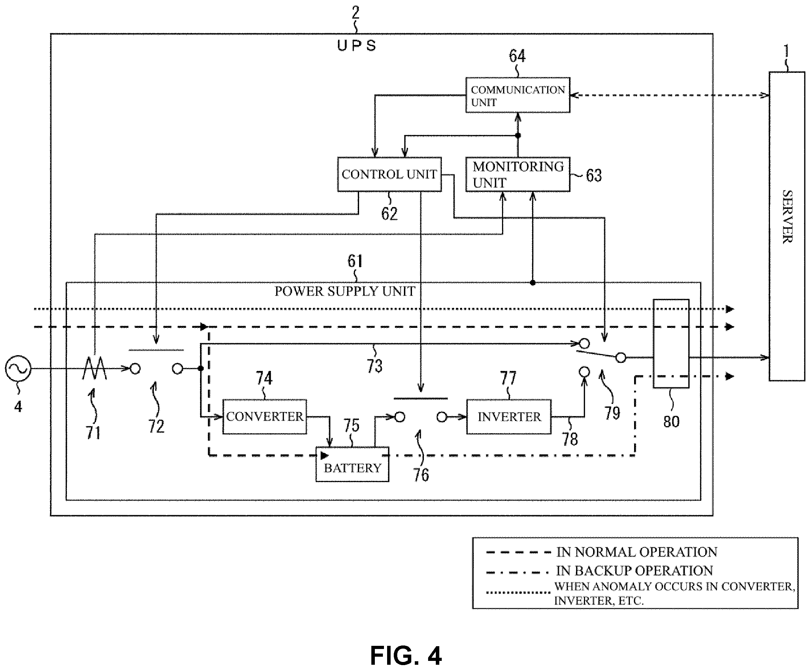

FIG. 4 is a block diagram illustrating a configuration of the UPS 2 according to the present embodiment. As shown in FIG. 4, the UPS 2 includes a power supply unit 61, a control unit 62, a monitoring unit 63, and a communication unit 64.

When the power from the commercial power supply 4 is normal, the power supply unit 61 receives power supplied from the commercial power supply 4 and supplies the power to the servers 1. Also, when the power from the commercial power supply 4 is anomalous, or power is not supplied, the power supply unit 61 supplies power to the servers 1 from the internal battery 75. The power supply unit 61 switches the power supply (commercial power supply 4 or battery 75), which serves as a power feeding source to the servers 1, in response to the instruction from the control unit 62.

The control unit 62 controls the opening/closing of an input relay 72 and an output relay 76, and switching of an output switch 79, of the power supply unit 61, in response to the instructions from the monitoring unit 63 and the communication unit 64. The monitoring unit 63 monitors the situation of a noise filter 71 of the power supply unit 61, and transmits a monitoring result indicating whether or not the power from the commercial power supply 4 is normal to the control unit 62 and the communication unit 64. The communication unit 64 transmits the monitoring result from the monitoring unit 63 to the servers 1. Also, the communication unit 64 makes an instruction regarding the switching of the power supply to the control unit 62 in response to an instruction from the servers 1.

### Configuration of power supply unit 61

As shown in FIG. 4, the power supply unit 61 includes the noise filter 71, the input relay 72, a power line 73, a converter 74, the battery 75, the output relay 76, an inverter 77, a power line 78, the output switch 79, and a noise filter 80.

In a normal operation, the input relay 72 is closed, the output relay 76 is open, and the output switch 79 is switched to the power line 73 side, by the control of the control unit 62. In this case, the power from the commercial power supply 4 is supplied to the servers 1 via the noise filter 71, the input relay 72, the power line 73, the output switch 79, and the noise filter 80. Also, the battery 75 is charged by the power from the commercial power supply 4 via the noise filter 71, the input relay 72, and the converter 74.

In a backup operation, the input relay 72 is open, the output relay 76 is closed, and the output switch 79 is switched to the power line 78 side, by the control of the control unit 62. In this case, the power from the battery 75 is supplied to the servers 1 via the output relay 76, the inverter 77, the power line 78, the output switch 79, and the noise filter 80. Note that the power from the commercial power supply 4 is not supplied to the servers 1.

When an anomaly occurs in the converter 74, the inverter 77, or the like of the power supply unit 61, the input relay 72 is closed, the output relay 76 is opened, and the output switch 79 is switched to the power line 73 side, by the control of the control unit 62. In this case, the power from the commercial power supply 4 is supplied to the servers 1 via the noise filter 71, the input relay 72, the power line 73, the output switch 79, and the noise filter 80. Note that the battery 75 is not charged by the power from the commercial power supply 4.

### Configuration of network card 3

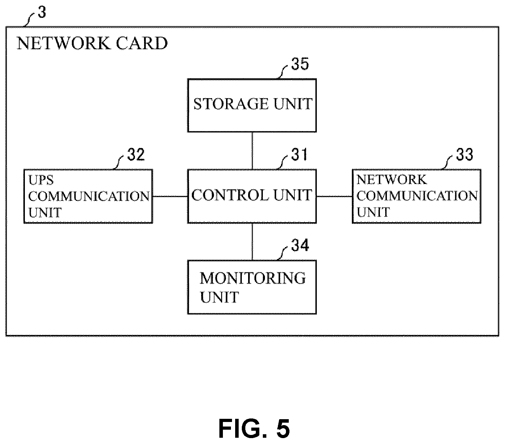

FIG. 5 is a block diagram illustrating a configuration of the network card 3 according to the present embodiment. As shown in FIG. 5, the network card 3 includes a control unit 31, a UPS communication unit 32, a network communication unit 33, a monitoring unit 34, and a storage unit 35. The control unit 31 controls the operations of the entire network card 3. The UPS communication unit 32 communicates with a UPS 2 via the slot of the UPS 2. The network communication unit 33 communicates with the servers 1 through the network cable C2, and is a network USB, for example. The monitoring unit 34 performs time monitoring when shutdown processing is performed. The storage unit 35 stores and reads out data in response to the instruction from the control unit 31, and is an HDD, an SSD, or the like.

### Processing of server 1

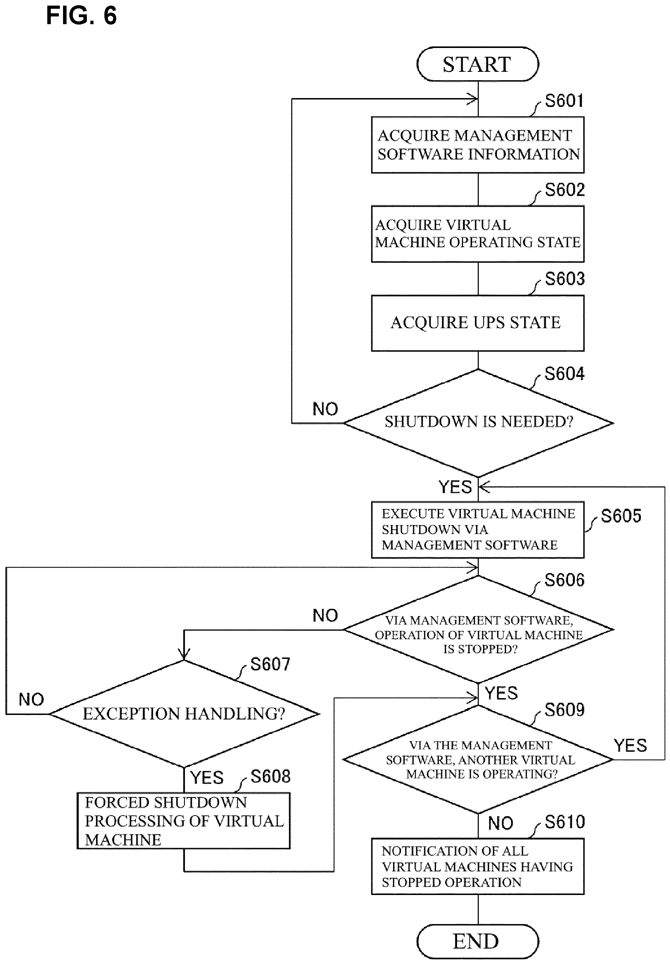

FIG. 6 is a flowchart illustrating processing of the server 1 according to the present embodiment. FIG. 6 shows the processing of the virtual software 12 of the control unit 10a of the server 1a. In the following, the processing of the virtual software 12 will be described following FIG. 6.

### Step S601

In the server 1a, the virtual software 12 acquires information regarding the management software 13 (e.g., information regarding the API).

### Step S602

The virtual software 12 acquires the operating states of the virtual machines 14 (operating or not) from the API of the management software 13. In this case, the management software 13 acquires the operating states of the virtual machines 14 in the server 1a, and acquires the operating states of the virtual machines 14 in the servers 1b and 1c via the network cable C2. Also, the management software 13 passes the acquired operating states of the virtual machines 14 to the virtual software 12.

### Step S603

The virtual software 12 acquires the states of the UPSs 2a and 2b through the API of the management software 13. In this case, the management software 13 instructs the network cards 3a and 3b to respectively report the states of the UPSs 2a and 2b via the network cable C2. Also, the management software 13 passes the acquired states of the UPSs 2a and 2b to the virtual software 12.

### Step S604

The virtual software 12 determines whether or not shutdown is needed by referring to the operating states of the virtual machines 14 acquired in step S602, and the states of the UPSs 2a and 2b acquired in step S603. For example, it is determined that the shutdown is needed if an operating virtual machine 14 is present and both of the UPSs 2a and 2b are performing the backup operation.

If the shutdown is needed (YES in step S604), the virtual software 12 executes the processing in step S605. If the shutdown is not needed (NO in step S604), the virtual software 12 again executes the processing in step S601.

### Step S605: First management step

The virtual software 12 executes shutdown of one virtual machine 14 that is operating via the management software 13 (that is, using the API of the management software 13).

### Step S606

The virtual software 12 confirms whether or not the operation of the virtual machine 14 regarding which shutdown was executed has stopped via the management software 13. If the operation of the virtual machine 14 has stopped (YES in step S606), the virtual software 12 executes the determination in step S609. If the operation of the virtual machine 14 has not stopped (NO in step S606), the virtual software 12 executes the determination in step S607.

### Step S607

The virtual software 12 determines whether or not exception handling (e.g., time-out monitoring processing) is to be performed. If exception handling is to be performed (YES in step S607), the virtual software 12 executes the determination in step S608. If exception handling is not to be performed (NO in step S607), the virtual software 12 again executes the determination in step S606.

### Step S608

The virtual software 12 executes forced shutdown processing of the virtual machine 14 via the management software 13. Also, the virtual software 12 executes the determination in step S609.

### Step S609

The virtual software 12 determines whether or not another virtual machine 14 is operating via the management software 13. If another virtual machine 14 is operating (YES in step S609), the virtual software 12 again executes the processing in step S605. If no other virtual machine 14 is operating (NO in step S609), the virtual software 12 executes the processing in step S610.

### Step S610: Second management step

The virtual software 12 notifies the network cards 3a and 3b of the fact that all of the virtual machines have stopped operation via the management software 13. With this, the shutdown of the servers 1 is performed.

### Processing of network card 3

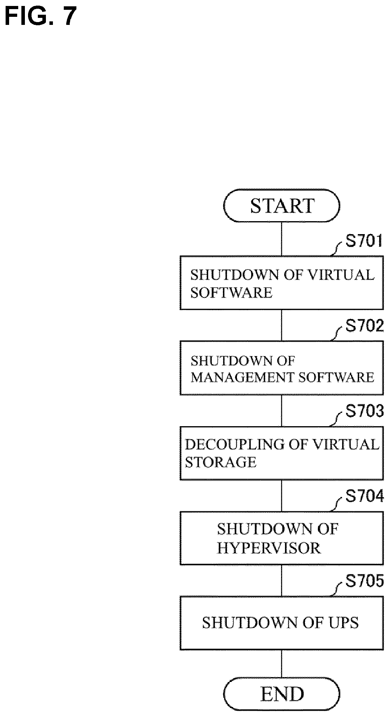

FIG. 7 is a flowchart illustrating processing of the network card 3 according to the present embodiment. In the following, the processing of the network card 3 will be described following FIG. 7. This processing is executed by the control unit 31 when the network communication unit 33 of the network card 3 has received a notification saying that all of the virtual machines have stopped operation from the virtual software 12.

### Step S701

The control unit 31 of the network card 3 executes the shutdown of the virtual software 12 via the network communication unit 33 and the network cable C2.

### Step S702

The control unit 31 executes the shutdown of the management software 13 via the network communication unit 33 and the network cable C2.

### Step S703

The control unit 31 decouples a virtual storage via the network communication unit 33 and the network cable C2. The virtual storage is a virtual storage device that is constituted by (logically coupling) a plurality of physical storage devices (such as an HDD (Hard Disk Drive) and an SSD (Solid State Drive)) in at least one server 1. As a result of releasing the coupling of the virtual storage, each physical storage device can be powered off.

Note that the physical storage device that constitutes the virtual storage need not be incorporated in or connected to the servers 1, and may be a NAS (Network Attached Storage) that is directly connected to the network cable C2 and is shared by the plurality of servers 1 through the network cable C2, or may also be constituted by a storage device controlled by a server 1 and a NAS.

### Step S704

The control unit 31 executes shutdown of the hypervisor 11 via the network communication unit 33 and the network cable C2.

### Step S705

The control unit 31 executes shutdown of the UPS 2 via the UPS communication unit 32.

### Effects of Embodiment 1

According to the present embodiment, as a result of adopting a method in which, instead of performing next processing at the set time, the next processing is performed after grasping the shutdown states of the virtual machines 14, the shutdown of the information processing system 100, which is a virtualization system, can be appropriately performed. Also, if the next processing cannot be executed due to some factor, the next processing is performed after forcibly performing shutdown by timeout processing, and as a result, the information processing system 100 can be shut down. Moreover, as a result of notifying the network card 3 of the fact that all of the virtual machines 14 are shut down, immediate scripts for shutting down the hypervisor 11, which is a virtual OS, decoupling the virtual storage, and the like can be executed.

### Embodiment 2

Embodiment 2 of the present invention will be described in the following. Note that, for the convenience of description, structural elements having the same functions as structural elements described in Embodiment 1 are given the same reference signs, and the description thereof will be omitted.

In the present embodiment, the screen that is managed by the virtual software 12 and is to be displayed in a display of the server 1 or a remote terminal (not illustrated) will be described.

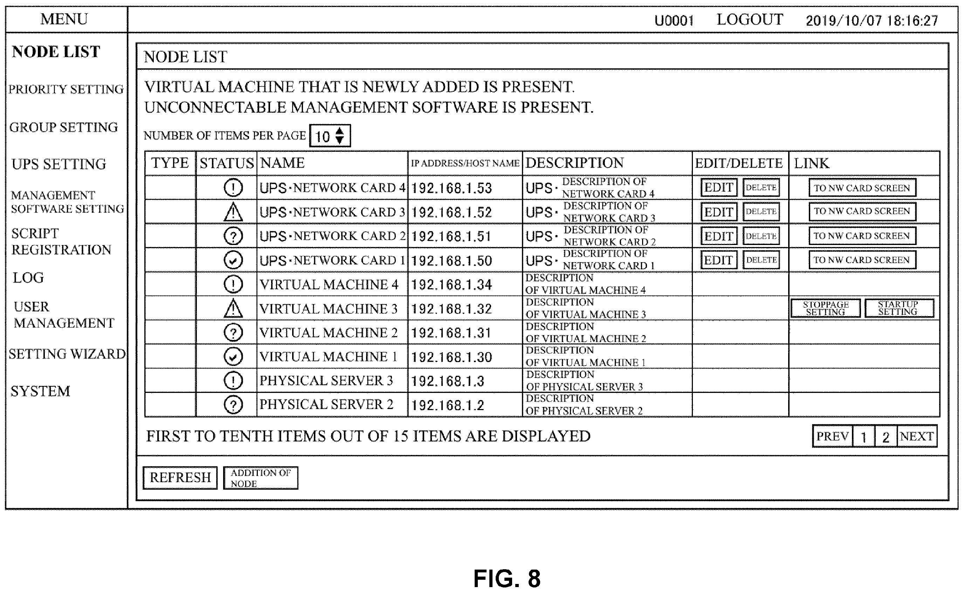

FIG. 8 is a diagram illustrating a display screen of a node list according to the present embodiment. As shown in FIG. 8, the node list shows the states of the servers 1, the UPSs 2, the network cards 3, the virtual machines 14, and the like.

The server 1 may have a test mode in which the plurality of virtual machines (guest OSs) 14 are shut down following a predetermined order. In this case, upon receiving an instruction to start the test mode that is given by a user operation, the control unit 10 of the server 1 executes the test mode.

In the test mode, the control unit 10 executes stoppage priority acquisition processing for acquiring the stoppage priority indicating the order of stopping the nodes, node stopping processing for sequentially stopping the nodes following the acquired stoppage priority, and shutdown time display processing for displaying, for each node, the period from when stopping was instructed until when stopping completion is reported, as the shutdown time.

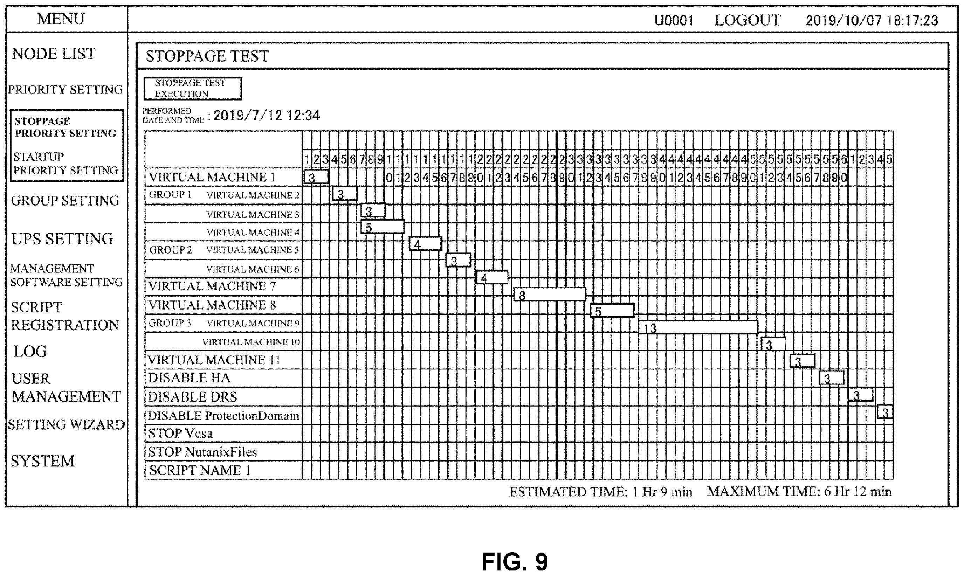

FIG. 9 is a diagram illustrating a screen for displaying the shutdown time and the like of each virtual machine 14 in a stoppage test according to the present embodiment.

The server 1 may further include a controller unit (display control unit) 125 that generates screen data for displaying the shutdown time of each virtual machine 14 in the test mode.

As shown in FIG. 9, the screen data may further include an estimated time (accumulated time) of the shutdown time of each virtual machine 14, an item indicating whether or not the shutdown of each virtual machine 14 is successful, and a maximum time (time limit of the accumulated time).

The estimated time is a sum of the shutdown times estimated from the period from when stopping was instructed to each virtual machine 14 until when stopping completion of the virtual machine 14 is reported, which is obtained as a result of the server 1 executing the test mode. The maximum time is the period for which the battery 75 can supply power in the backup operation. If the estimated time is the maximum time or less, it can be said that there is no problem because the shutdown of all of the virtual machines 14 can be ended in a period for which the battery 75 can supply power.

When the shutdown of a virtual machine 14 is normally ended, the display control unit generates screen data including a black band corresponding to the virtual machine 14, for example. If the shutdown of a virtual machine 14 is abnormally ended, the display control unit generates the screen data including a red band corresponding to the virtual machine 14, for example.

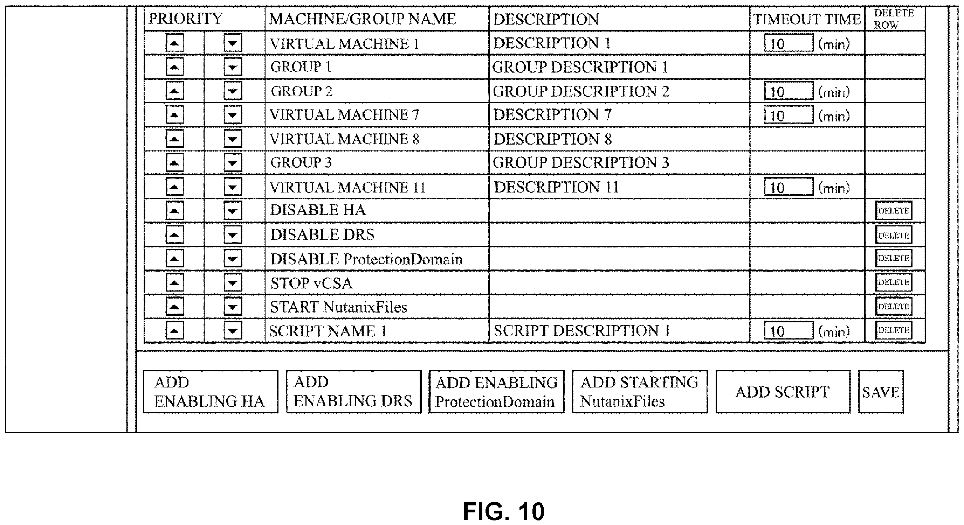

FIG. 10 is a diagram illustrating a screen for setting a timeout time of each node according to the present embodiment. As shown in FIG. 10, in the setting screen of the timeout time, necessary nodes can be added and the timeout time can be set.

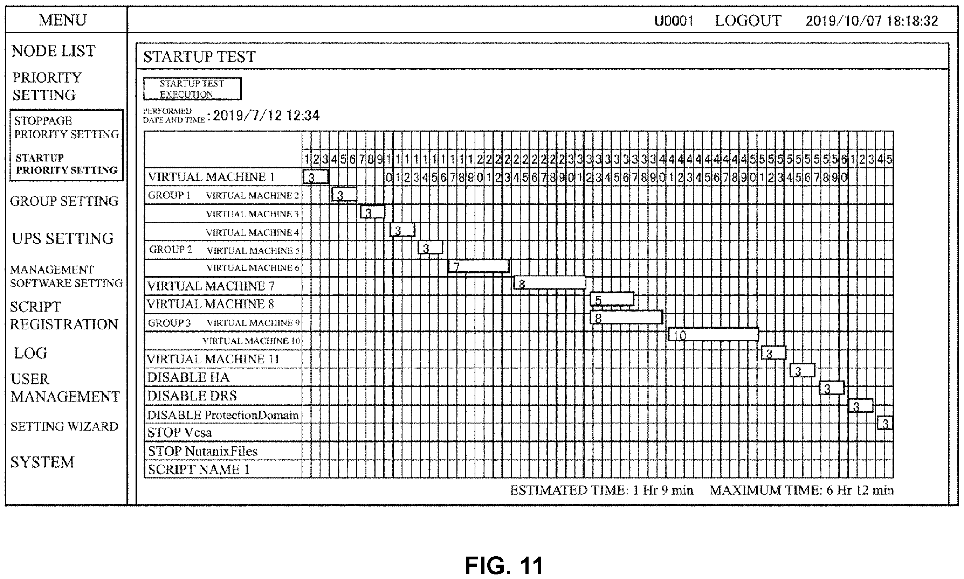

FIG. 11 is a diagram illustrating a screen for executing a startup test according to the present embodiment. As shown in FIG. 11, the execution screen of the startup test shows the startup order of the nodes, and the startup time of each node. The configuration may also be such that the server 1 performs the startup test of the plurality of virtual machines (guest OSs) 14 following a predetermined order. In this case, upon receiving an instruction to start the startup test that is given by a user operation, the control unit 10 of the server 1 executes the startup test. The startup test is performed in order for the user to confirm that each node normally starts up, after the test mode.

In the startup test, the control unit 10 executes startup priority acquisition processing for acquiring the startup priority indicating the order of starting up the nodes, node startup processing for sequentially starting up the nodes following the acquired startup priority, and startup time display processing for displaying, for each node, the period from when startup was instructed until when startup completion is reported, as the startup time.

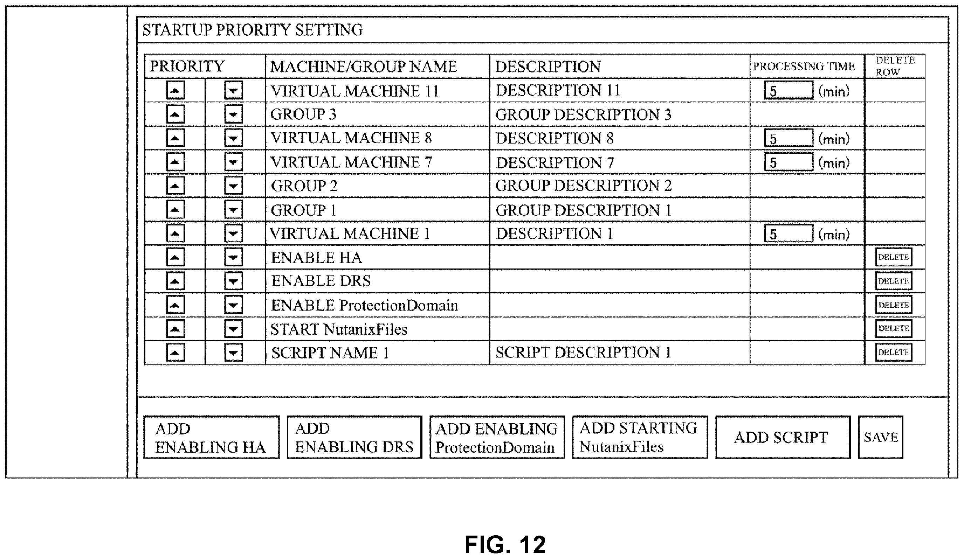

FIG. 12 is a diagram illustrating a screen for setting the startup priority according to the present embodiment. As shown in FIG. 12, in the setting screen of the startup priority, the user can change the priority of starting up the nodes by operating up and down buttons.

When the startup priority of the nodes is changed, the user makes an instruction to display a startup priority setting screen by operating the server 1. The control unit 10 of the server 1, upon receiving an instruction to display the startup priority setting screen, displays the startup priority setting screen in the display of the server 1. Also, when the startup priority is changed on the setting screen by the user operation, the control unit 10 stores the changed startup priority in a storage unit (not illustrated). Also, the control unit 10, upon receiving an instruction to start up the information processing system 100, reads out the startup priority from the storage unit, and starts up the nodes following the startup priority.

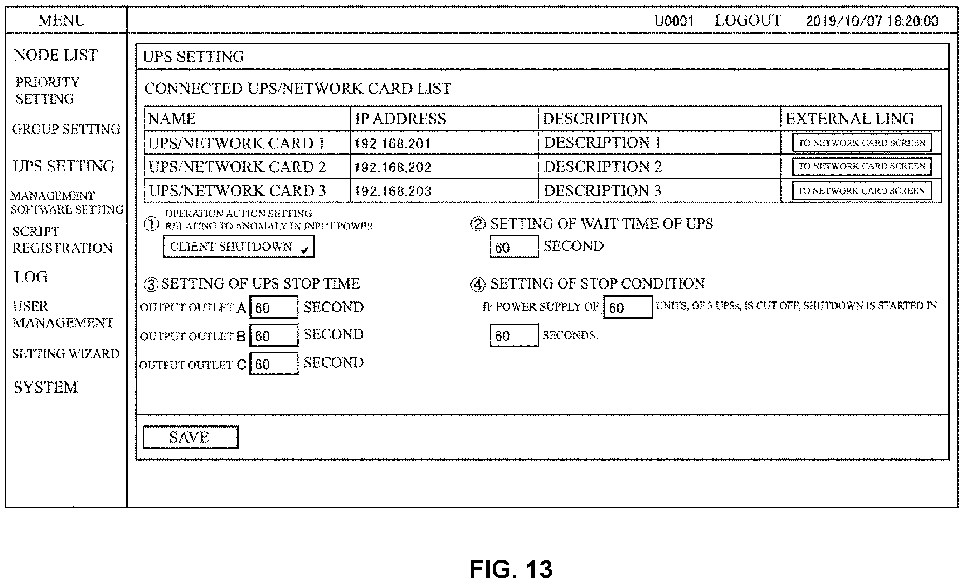

FIG. 13 is a diagram illustrating a setting screen regarding the UPS 2 according to the present embodiment. As shown in FIG. 13, in the setting screen of the UPS 2, an operation action regarding an anomaly in an input power supply, a wait time, a stop time, and a stop condition can be set.

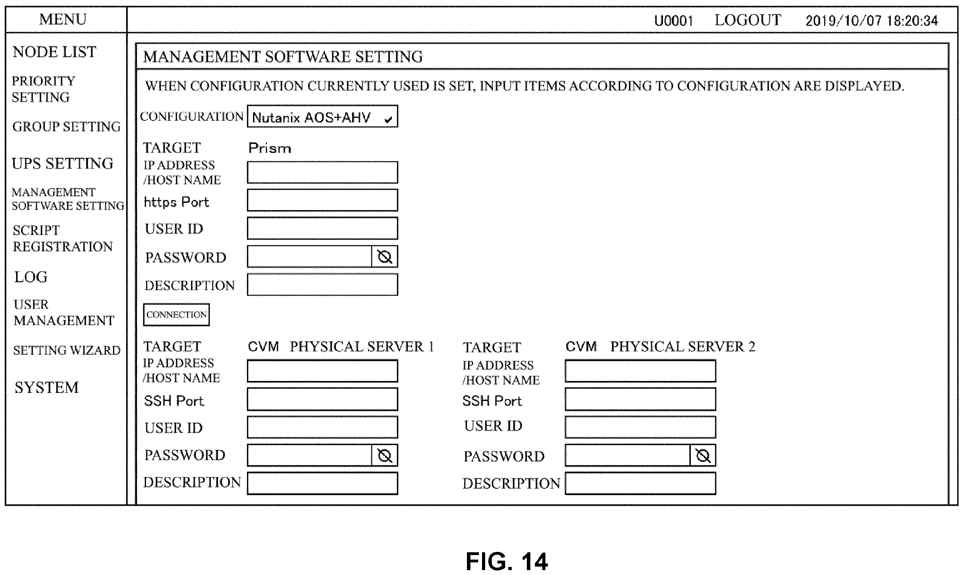

FIG. 14 is a diagram illustrating a setting screen regarding the management software 13 according to the present embodiment. As shown in FIG. 14, in the setting screen regarding the management software 13, Prism, which is one program of the management software 13, the IP address/host name of a server 1 to which the Prism is to be connected, the user ID, the password, and the like can be set.

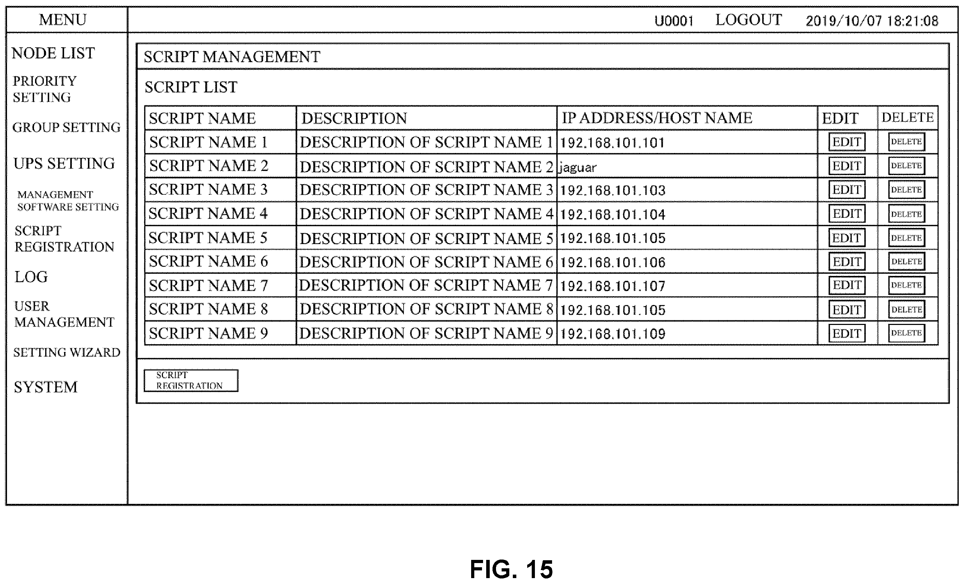

FIG. 15 is a diagram illustrating a script management screen according to the present embodiment. As shown in FIG. 15, in the script management screen, the IP addresses/host names of scripts to be executed in the network card 3 can be managed.

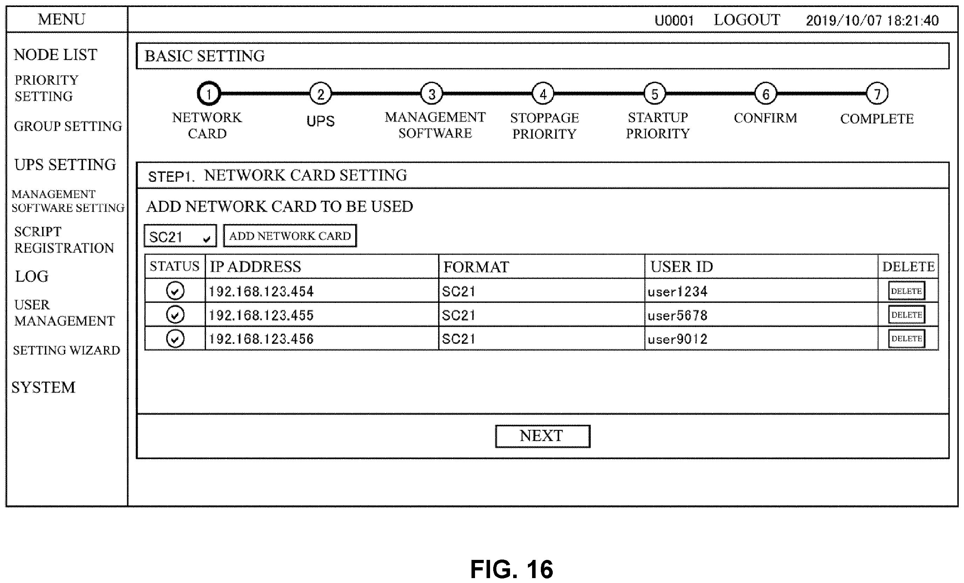

FIG. 16 is a diagram illustrating a basic setting screen according to the present embodiment. As shown in FIG. 16, in the basic setting screen, settings of the network cards 3, the UPSs 2, the management software 13, the stoppage priority and the startup priority of the nodes can be sequentially performed, and the settings can be confirmed.

### Exemplary implementation by software

The control blocks of the server 1 (specifically, the control unit 10) may be realized by logic circuits (hardware) formed in an integrated circuit (IC chip) or the like, or may be realized by software.

In the latter case, the server 1 include a computer that executes commands in programs, which are software for implementing the functions. This computer includes at least one processor, and a computer-readable recording medium in which the programs are stored, for example. Also, the object of the present invention is achieved by the processor reading out the programs from the recording medium and executing the programs, in the computer. A CPU (central processing unit) can be used as the processor, for example. A "non-transitory physical medium" such as a ROM (read only memory), tape, a disk, a card, a semiconductor memory, a programmable logic circuit, or the like can be used as the recording medium. Also, a RAM (random access memory) in which the programs are to be deployed may further be included. Also, the programs may also be supplied to the computer through any transmission medium capable of transmitting the programs (a communication network, broadcast waves, or the like). An aspect of the present invention can be realized as data signals embedded in carrier waves so as to realize the electronic transmission of the programs.

The present invention is not intended to be limited to the embodiments described above, and various changes can be made within the scope defined by the claims. Embodiments achieved by appropriately combining the technical means disclosed in different embodiments also fall within the technical scope of the present invention.

### INDEX TO THE REFERENCE NUMERALS

1, 1a, 1b, 1c Server (information processing device)
2, 2a, 2b UPS (uninterruptible power supply device)
10, 10a Control unit
3, 3a, 3b Network card (control device)
11 Hypervisor (virtual OS)
12 Virtual software
13 Management software (third management unit)
14 Virtual machine (guest OS)
121 Network card service unit (second management unit)
122 Basic service unit (first management unit)
125 Controller unit (display control unit)

## Claims

1. An information processing device (1a) that includes:
a first management unit (122) configured to manage shutdown of a plurality of virtual machines (14) that operate on a hypervisor (11); and
**characterized in that** the first management unit (122) is configured to:
a) start to execute shutdown of one of the plurality of virtual machines (14); and
b) upon acquiring information indicating that shutdown of the one of the plurality of virtual machines (14) is completed, repeating sub-steps a) and b) for a virtual machine (14) other than the one virtual machine (14) until all of the plurality of virtual machines (14) have been shut down.

2. The information processing device (1a) according to claim 1,
wherein upon acquiring information indicating that shutdown of the one virtual machine (14) is completed, the first management unit (122) is configured to execute shutdown of a virtual machine (14) other than the one virtual machine (14) without waiting for a time-out time for forced shutdown of the one virtual machine (14) to pass.

3. The information processing device (1a) according to claim 2,
wherein the first management unit (122) is configured to execute forced shutdown of the one virtual machine (14) if the time-out time passes before shutdown of the one virtual machine (14) is completed.

4. The information processing device (1a) according to any of claims 1 to 3,
wherein the information processing device (1a) includes a third management unit (13) that monitors the statuses of the plurality of virtual machines (14) and controls the plurality of virtual machines (14), and
the first management unit (122):
acquires status information of each of the plurality of virtual machines (14) via the third management unit (13), and
executes shutdown of the plurality of virtual machines (14) via the third management unit (13).

5. The information processing device (1a) according to any of claims 1 to 4,
further including a second management unit (121) configured to shut down the information processing device (1) when all of the plurality of virtual machines (14) have been shut down by the first management unit (122),
wherein the second management unit (121), when all of the plurality of virtual machines (14) are shut down by the first management unit (122), shuts down the information processing device (1) via a control device (3) that controls the information processing device (1) and an uninterruptible power supply device (2) connected to the information processing device (1).

6. The information processing device (1a) according to any of claims 1 to 5,
wherein the information processing device (1a) has a test mode in which the plurality of virtual machines (14) are shut down following a predetermined order upon receiving an instruction to start the test mode that is given by a user, in addition to a mode in which the plurality of virtual machines (14) are shut down if some virtual machines (14) are operating and an uninterruptible power supply device (2a, 2b) connected to the information processing device (1a, 1b, 1c) is performing a backup operation.

7. The information processing device (1a) according to claim 6, further comprising a display control unit (125) configured to display a stoppage priority setting screen (16) for a user to set a stoppage priority indicating the order of starting to execute shutdown of each of the plurality of virtual machines (14),
wherein the display control unit (125) is configured to acquire the stoppage situations of the virtual machines (14) and display a stoppage progress chart of the virtual machines (14) on the stoppage priority setting screen (16).

8. The information processing device (1a) according to claim 7, wherein the display control unit (125) is configured to generate screen data for displaying a shutdown time of each virtual machines (14) on the stoppage priority setting screen (16) in the test mode.

9. The information processing device (1a) according to claim 8,
wherein the screen data further includes:
an accumulated time of the shutdown time of each virtual machines (14);
an indication whether or not each virtual machine (14) has been successfully shut down; and
a time limit of the accumulated time.

10. A management program to be executed on a hypervisor (11) to be executed on at least one information processing device (1a), the management program causing the at least one information processing device (1a) to carry out:
a first management step of managing shutdown of a plurality of virtual machines (14) that operate on the hypervisor (11); and
wherein, the first management step comprises the sub-steps of:
a) starting to execute shutdown of one of the plurality of virtual machines (14); and
b) upon acquiring information indicating that shutdown of the one of the plurality of virtual machines (14) is completed, repeating sub-steps a) and b) for a virtual machine (14) other than the one virtual machine (14) until all of the plurality of virtual machines (14) have been shut down.

11. A management method to be executed on at least one information processing device (1a), the management method causes the at least one information processing device (1a) to carry out:
a first management step of managing shutdown of a plurality of virtual machines (14) that operate on the hypervisor (11); and
wherein the first management step comprises the sub-steps of:
a) starting to execute shutdown of one of the plurality of virtual machines (14); and
b) upon acquiring information indicating that shutdown of the one of the plurality of virtual machines (14) is completed, repeating sub-steps a) and b) for a virtual machine (14) other than the one virtual machine (14) until all of the plurality of virtual machines (14) have been shut down.

12. An information processing system (100) that includes:
an information processing device (1a) according to any of claims 1 to 9,
an uninterruptible power supply device (2), and
a control device (3).

13. The information processing system (100) according to claim 12
wherein the information processing device (1a) is configured to notify the control device (3) of the fact that all of the virtual machines (14) have stopped operation, and
the control device (3) is configured to shut down the information processing device (1a, 1b, 1c) and the uninterruptible power supply device (2) upon receiving a notification saying that all of the virtual machines (14) have stopped operation from the information processing device (1a).

14. An information processing system (100) that includes a plurality of information processing devices (1a, 1b, 1c),
wherein at least one of the information processing devices (1a, 1b, 1c) is an information processing device (1a) according to any one of claims of 1 to 9,
wherein each of the plurality of processing devices (1a, 1b, 1c) has a respective hypervisor (11),
wherein a respective portion of the plurality of virtual machines (14) operates on each of the hypervisors (11).

15. The information processing system (100) according to claim 14,
wherein the control device (3) is configured to decouple a virtual storage constituted by a plurality of physical storage devices of the information processing device (1a, 1b, 1c) upon receiving a notification saying that all of the virtual machines (14) have stopped operation from the information processing device (1a).

16. The information processing system (100) according to claim 14,
further including at least one control device (3a, 3b) and at least one uninterruptible power supply (2a, 2b),
wherein the information processing device (1a) is configured to notify the respective control device (3a, 3b) of the fact that all of the virtual machines (14) have stopped operation, and
the respective control device (3a, 3b) is configured to shut down the corresponding information processing device (1a, 1b, 1c) and uninterruptible power supply device (2a, 2b) upon receiving a notification saying that all of the virtual machines (14) have stopped operation from the corresponding information processing device (1a, 1b, 1c).

17. The information processing system (100) according to claim 16,
wherein the respective control device (3a, 3b) is configured to decouple a virtual storage constituted by a plurality of physical storage devices of the information processing device (1a, 1b, 1c) upon receiving a notification saying that all of the virtual machines (14) have stopped operation from the information processing device (1a).

## Patentansprüche

1. Informationsverarbeitungsvorrichtung (1a), aufweisend:
eine erste Verwaltungseinheit (122), die dazu eingerichtet ist, einen Abschaltvorgang von mehreren virtuellen Maschinen (14) zu verwalten, die auf einem Hypervisor (11) ausgeführt werden; und
**dadurch gekennzeichnet, dass** die erste Verwaltungseinheit (122) dazu eingerichtet ist:
a) die Ausführung eines Abschaltvorgangs von einer der mehreren virtuellen Maschinen (14) zu beginnen; und
b) nach dem Erlangen von Informationen, die angeben, dass der Abschaltvorgang der einen der mehreren virtuellen Maschinen (14) abgeschlossen ist, die Teilschritte a) und b) für eine andere virtuelle Maschine (14) als die eine virtuelle Maschine (14) zu wiederholen, bis alle der mehreren virtuellen Maschinen (14) abgeschaltet worden sind.

2. Informationsverarbeitungsvorrichtung (1a) nach Anspruch 1,
wobei nach dem Erlangen von Informationen, die angeben, dass der Abschaltvorgang der einen virtuellen Maschine (14) abgeschlossen ist, die erste Verwaltungseinheit (122) dazu eingerichtet ist, einen Abschaltvorgang einer anderen virtuellen Maschine (14) als der einen virtuellen Maschine (14) auszuführen, ohne auf eine Zeitüberschreitungszeit für einen erzwungenen Abschaltvorgang der einen virtuellen Maschine (14) zu warten.

3. Informationsverarbeitungsvorrichtung (1a) nach Anspruch 2,
wobei die erste Verwaltungseinheit (122) dazu eingerichtet ist, einen erzwungenen Abschaltvorgang der einen virtuellen Maschine (14) auszuführen, wenn die Zeitüberschreitungszeit verstrichen ist, bevor der Abschaltvorgang der einen virtuellen Maschine (14) abgeschlossen ist.

4. Informationsverarbeitungsvorrichtung (1a) nach einem der Ansprüche 1 bis 3,
wobei die Informationsverarbeitungsvorrichtung (1a) eine dritte Verwaltungseinheit (13) aufweist, die die Zustände der mehreren virtuellen Maschinen (14) überwacht und die mehreren virtuellen Maschinen (14) steuert, und
die erste Verwaltungseinheit (122):
einen Abschaltvorgang der mehreren virtuellen Maschinen (14) über die dritte Verwaltungseinheit (13) auszuführen.

5. Informationsverarbeitungsvorrichtung (1a) nach einem der Ansprüche 1 bis 4,
ferner aufweisend eine zweite Verwaltungseinheit (121), die dazu eingerichtet ist, die Informationsverarbeitungsvorrichtung (1) abzuschalten, wenn alle der mehreren virtuellen Maschinen (14) durch die erste Verwaltungseinheit (122) abgeschaltet worden sind,
wobei die zweite Verwaltungseinheit (121), wenn alle der mehreren virtuellen Maschinen (14) durch die erste Verwaltungseinheit (122) abgeschaltet sind, die Informationsverarbeitungsvorrichtung (1) über eine Steuervorrichtung (3), die die Informationsverarbeitungsvorrichtung (1) steuert, und eine unterbrechungsfreie Stromversorgungsvorrichtung (2), die mit der Informationsverarbeitungsvorrichtung (1) verbunden ist, abschaltet.

6. Informationsverarbeitungsvorrichtung (1a) nach einem der Ansprüche 1 bis 5,
wobei die Informationsverarbeitungsvorrichtung (1a) zusätzlich zu einem Modus, in dem die mehreren virtuellen Maschinen (14) abgeschaltet werden, wenn einige virtuelle Maschinen (14) in Betrieb sind und eine unterbrechungsfreie Stromversorgungsvorrichtung (2a, 2b), die mit der Informationsverarbeitungsvorrichtung (1a, 1b, 1c) verbunden ist, eine Sicherungsoperation durchführt, einen Testmodus aufweist, in dem die mehreren virtuellen Maschinen (14) nach einer vorbestimmten Reihenfolge nach Empfang einer Anweisung zum Starten des Testmodus, die durch einen Benutzer gegeben wird, abgeschaltet werden.

7. Informationsverarbeitungsvorrichtung (1a) nach Anspruch 6, ferner aufweisend eine Anzeigesteuereinheit (125), die dazu eingerichtet ist, einen Stoppprioritätseinstellungsbildschirm (16) für einen Benutzer anzuzeigen, um eine Stopppriorität einzustellen, die die Reihenfolge des Beginns der Ausführung eines Abschaltvorgangs der einzelnen virtuellen Maschinen (14) angibt,
wobei die Anzeigesteuereinheit (125) dazu eingerichtet ist, die Stoppsituationen der virtuellen Maschinen (14) zu erfassen und ein Stoppfortschrittsdiagramm der virtuellen Maschinen (14) auf dem Stoppprioritätseinstellungsbildschirm (16) anzuzeigen.

8. Informationsverarbeitungsvorrichtung (1a) nach Anspruch 7, wobei die Anzeigesteuereinheit (125) dazu eingerichtet ist, Bildschirmdaten zum Anzeigen einer Abschaltzeit der einzelnen virtuellen Maschinen (14) auf dem Stoppprioritätseinstellungsbildschirm (16) in dem Testmodus zu erzeugen.

9. Informationsverarbeitungsvorrichtung (1a) nach Anspruch 8,
wobei die Bildschirmdaten ferner aufweisen:
eine akkumulierte Zeit der Abschaltzeit der einzelnen virtuellen Maschinen (14);
eine Angabe, ob die einzelnen virtuellen Maschinen (14) erfolgreich abgeschaltet worden sind oder nicht; und
eine Zeitbegrenzung der akkumulierten Zeit.

10. Verwaltungsprogramm zur Ausführung auf einem Hypervisor (11) zur Ausführung auf mindestens einer Informationsverarbeitungsvorrichtung (1a), wobei das Verwaltungsprogramm die mindestens eine Informationsverarbeitungsvorrichtung (1a) dazu veranlasst, Folgendes auszuführen:
einen ersten Verwaltungsschritt zum Verwalten eines Abschaltvorgangs von mehreren virtuellen Maschinen (14), die auf dem Hypervisor (11) ausgeführt werden; und
wobei der erste Verwaltungsschritt die folgenden Teilschritte aufweist:
a) Beginnen der Ausführung eines Abschaltvorgangs von einer der mehreren virtuellen Maschinen (14); und
b) nach dem Erlangen von Informationen, die angeben, dass der Abschaltvorgang der einen der mehreren virtuellen Maschinen (14) abgeschlossen ist, Wiederholen der Teilschritte a) und b) für eine andere virtuelle Maschine (14) als die eine virtuelle Maschine (14), bis alle der mehreren virtuellen Maschinen (14) abgeschaltet worden sind.

11. Verwaltungsverfahren zur Ausführung auf mindestens einer Informationsverarbeitungsvorrichtung (1a), wobei das Verwaltungsverfahren die mindestens eine Informationsverarbeitungsvorrichtung (1a) dazu veranlasst, Folgendes auszuführen:
einen ersten Verwaltungsschritt zum Verwalten eines Abschaltvorgangs von mehreren virtuellen Maschinen (14), die auf dem Hypervisor (11) ausgeführt werden; und
wobei der erste Verwaltungsschritt die folgenden Teilschritte aufweist:
a) Beginnen der Ausführung eines Abschaltvorgangs von einer der mehreren virtuellen Maschinen (14); und
b) nach dem Erlangen von Informationen, die angeben, dass der Abschaltvorgang der einen der mehreren virtuellen Maschinen (14) abgeschlossen ist, Wiederholen der Teilschritte a) und b) für eine andere virtuelle Maschine (14) als die eine virtuelle Maschine (14), bis alle der mehreren virtuellen Maschinen (14) abgeschaltet worden sind.

12. Informationsverarbeitungssystem (100), aufweisend:
eine Informationsverarbeitungsvorrichtung (1a) nach einem der Ansprüche 1 bis 9,
eine unterbrechungsfreie Stromversorgungsvorrichtung (2), und
eine Steuervorrichtung (3).

13. Informationsverarbeitungssystem (100) nach Anspruch 12,
wobei die Informationsverarbeitungsvorrichtung (1a) dazu eingerichtet ist, die Steuervorrichtung (3) über die Tatsache zu benachrichtigen, dass alle der virtuellen Maschinen (14) den Betrieb gestoppt haben, und
die Steuervorrichtung (3) dazu eingerichtet ist, die Informationsverarbeitungsvorrichtung (1a, 1b, 1c) und die unterbrechungsfreie Stromversorgungsvorrichtung (2) nach Empfang einer Benachrichtigung, die besagt, dass alle der virtuellen Maschinen (14) den Betrieb gestoppt haben, von der Informationsverarbeitungsvorrichtung (1a) abzuschalten.

14. Informationsverarbeitungssystem (100), mit mehreren Informationsverarbeitungsvorrichtungen (1a, 1b, 1c),
wobei mindestens eine der Informationsverarbeitungsvorrichtungen (1a, 1b, 1c) eine Informationsverarbeitungsvorrichtung (1a) nach einem der Ansprüche 1 bis 9 ist,
wobei jede der mehreren Verarbeitungsvorrichtungen (1a, 1b, 1c) einen jeweiligen Hypervisor (11) aufweist,
wobei ein jeweiliger Teil der mehreren virtuellen Maschinen (14) auf jedem der Hypervisoren (11) ausgeführt wird.

15. Informationsverarbeitungssystem (100) nach Anspruch 14,
wobei die Steuervorrichtung (3) dazu eingerichtet ist, einen virtuellen Speicher, der aus mehreren physischen Speichervorrichtungen der Informationsverarbeitungsvorrichtung (1a, 1b, 1c) besteht, nach Empfang einer Benachrichtigung, die besagt, dass alle der virtuellen Maschinen (14) den Betrieb gestoppt haben, von der Informationsverarbeitungsvorrichtung (1a) zu entkoppeln.

16. Informationsverarbeitungssystem (100) nach Anspruch 14,
wobei die Informationsverarbeitungsvorrichtung (1a) dazu eingerichtet ist, die jeweilige Steuervorrichtung (3a, 3b) über die Tatsache zu benachrichtigen, dass alle der virtuellen Maschinen (14) den Betrieb gestoppt haben, und
die jeweilige Steuervorrichtung (3a, 3b) dazu eingerichtet ist, die entsprechende Informationsverarbeitungsvorrichtung (1a, 1b, 1c) und die unterbrechungsfreie Stromversorgungsvorrichtung (2a, 2b) nach Empfang einer Benachrichtigung, die besagt, dass alle der virtuellen Maschinen (14) den Betrieb gestoppt haben, von der entsprechenden Informationsverarbeitungsvorrichtung (1a, 1b, 1c) abzuschalten.

17. Informationsverarbeitungssystem (100) nach Anspruch 16,
wobei die jeweilige Steuervorrichtung (3a, 3b) dazu eingerichtet ist, einen virtuellen Speicher, der aus mehreren physischen Speichervorrichtungen der Informationsverarbeitungsvorrichtung (1a, 1b, 1c) besteht, nach Empfang einer Benachrichtigung, die besagt, dass alle der virtuellen Maschinen (14) den Betrieb gestoppt haben, von der Informationsverarbeitungsvorrichtung (1a) zu entkoppeln.

## Revendications

1. Dispositif de traitement d'informations (1a) qui comprend :
une première unité de gestion (122) configurée pour gérer un arrêt d'une pluralité de machines virtuelles (14) qui fonctionnent sur un hyperviseur (11) ; et
**caractérisé en ce que** la première unité de gestion (122) est configurée pour :
a) démarrer pour exécuter un arrêt d'une machine de la pluralité de machines virtuelles (14) ; et
b) lors d'une acquisition d'informations indiquant l'exécution d'un arrêt de ladite machine de la pluralité de machines virtuelles (14), répéter les sous-étapes a) et b) pour une machine virtuelle (14) autre que ladite machine virtuelle (14) jusqu'à ce que toutes les machines de la pluralité de machines virtuelles (14) aient été arrêtées.

2. Dispositif de traitement d'informations (1a) selon la revendication 1, dans lequel, lors d'une acquisition d'informations indiquant l'exécution d'un arrêt de ladite machine virtuelle (14), la première unité de gestion (122) est configurée pour exécuter un arrêt d'une machine virtuelle (14) autre que ladite machine virtuelle (14) sans attendre qu'un temps de temporisation d'arrêt forcé de ladite machine virtuelle (14) ne soit écoulé.

3. Dispositif de traitement d'informations (1a) selon la revendication 2, dans lequel la première unité de gestion (122) est configurée pour exécuter un arrêt forcé de ladite machine virtuelle (14) si le temps de temporisation s'est écoulé avant l'exécution d'un arrêt de ladite machine virtuelle (14).

4. Dispositif de traitement d'informations (1a) selon l'une quelconque des revendications 1 à 3,
dans lequel le dispositif de traitement d'informations (1a) comprend une troisième unité de gestion (13) qui surveille les états des machines de la pluralité de machines virtuelles (14) et qui commande les machines de la pluralité de machines virtuelles (14), et
la première unité de gestion (122) :
acquiert des informations d'état de chaque machine de la pluralité de machines virtuelles (14) par le biais de la troisième unité de gestion (13), et
exécute un arrêt des machines de la pluralité de machines virtuelles (14) par le biais de la troisième unité de gestion (13).

5. Dispositif de traitement d'informations (1a) selon l'une quelconque des revendications 1 à 4,
comprenant en outre une deuxième unité de gestion (121) configurée pour arrêter le dispositif de traitement d'informations (1) lorsque toutes les machines de la pluralité de machines virtuelles (14) ont été arrêtées par la première unité de gestion (122),
dans lequel la deuxième unité de gestion (121), lorsque toutes les machines de la pluralité de machines virtuelles (14) ont été arrêtées par la première unité de gestion (122), arrête le dispositif de traitement d'informations (1) par le biais d'un dispositif de commande (3) qui commande le dispositif de traitement d'informations (1) et un dispositif d'alimentation sans coupure (2) connecté au dispositif de traitement d'informations (1).

6. Dispositif de traitement d'informations (1a) selon l'une quelconque des revendications 1 à 5,
dans lequel le dispositif de traitement d'informations (1a) comporte un mode de test dans lequel les machines de la pluralité de machines virtuelles (14) sont arrêtées suivant un ordre prédéterminé lors d'une réception d'une instruction dont l'objet est de démarrer le mode de test qui est donnée par un utilisateur, en plus d'un mode dans lequel les machines de la pluralité de machines virtuelles (14) sont arrêtées si certaines machines virtuelles (14) sont en fonctionnement et si un dispositif d'alimentation sans coupure (2a, 2b) connecté au dispositif de traitement d'informations (1a, 1b, 1c) met en oeuvre une opération de sauvegarde.

7. Dispositif de traitement d'informations (1a) selon la revendication 6, comprenant en outre une unité de commande d'affichage (125) configurée pour afficher un écran de définition de priorité d'arrêt (16) permettant à un utilisateur de définir une priorité d'arrêt indiquant l'ordre de démarrage d'exécution d'un arrêt de chaque machine de la pluralité de machines virtuelles (14),
dans lequel l'unité de commande d'affichage (125) est configurée pour acquérir les situations d'arrêt des machines virtuelles (14) et pour afficher une carte de progression d'arrêt des machines virtuelles (14) sur l'écran de définition de priorité d'arrêt (16).

8. Dispositif de traitement d'informations (1a) selon la revendication 7, dans lequel l'unité de commande d'affichage (125) est configurée pour générer des données d'écran à des fins d'affichage d'un temps d'arrêt de chaque machine virtuelle (14) sur l'écran de définition de priorité d'arrêt (16) dans le mode de test.

9. Dispositif de traitement d'informations (1a) selon la revendication 8,
dans lequel les données d'écran comprennent en outre :
un temps cumulé du temps d'arrêt de chaque machine virtuelle (14) ;
une indication du fait que chaque machine virtuelle (14) a, ou non, été arrêtée avec succès ; et
une limite de temps du temps cumulé.

10. Programme de gestion à exécuter sur un hyperviseur (11) à exécuter sur au moins un dispositif de traitement d'informations (1a), le programme de gestion amenant l'au moins un dispositif de traitement d'informations (1a) à exécuter :
une première étape de gestion consistant à gérer un arrêt d'une pluralité de machines virtuelles (14) qui fonctionnent sur l'hyperviseur (11) ; et
dans lequel la première étape de gestion comprend les sous-étapes consistant à :
a) démarrer pour exécuter un arrêt d'une machine de la pluralité de machines virtuelles (14) ; et
b) lors d'une acquisition d'informations indiquant l'exécution d'un arrêt de ladite machine de la pluralité de machines virtuelles (14), répéter les sous-étapes a) et b) pour une machine virtuelle (14) autre que ladite machine virtuelle (14) jusqu'à ce que toutes les machines de la pluralité de machines virtuelles (14) aient été arrêtées.

11. Procédé de gestion à exécuter sur au moins un dispositif de traitement d'informations (1a), le procédé de gestion amenant l'au moins un dispositif de traitement d'informations (1a) à exécuter :
une première étape de gestion consistant à gérer un arrêt d'une pluralité de machines virtuelles (14) qui fonctionnent sur l'hyperviseur (11) ; et
dans lequel la première étape de gestion comprend les sous-étapes consistant à :
a) démarrer pour exécuter un arrêt d'une machine de la pluralité de machines virtuelles (14) ; et
b) lors d'une acquisition d'informations indiquant l'exécution d'un arrêt de ladite machine de la pluralité de machines virtuelles (14), répéter les sous-étapes a) et b) pour une machine virtuelle (14) autre que ladite machine virtuelle (14) jusqu'à ce que toutes les machines de la pluralité de machines virtuelles (14) aient été arrêtées.

12. Système de traitement d'informations (100) qui comprend :
un dispositif de traitement d'informations (1a) selon l'une quelconque des revendications 1 à 9,
un dispositif d'alimentation sans coupure (2), et
un dispositif de commande (3).

13. Système de traitement d'informations (100) selon la revendication 12,
dans lequel le dispositif de traitement d'informations (1a) est configuré pour notifier au dispositif de commande (3) le fait que toutes les machines des machines virtuelles (14) ont arrêté de fonctionner, et
le dispositif de commande (3) est configuré pour arrêter le dispositif de traitement d'informations (1a, 1b, 1c) et le dispositif d'alimentation sans coupure (2) lors d'une réception d'une notification mentionnant le fait que toutes les machines des machines virtuelles (14) ont arrêté de fonctionner en provenance du dispositif de traitement d'informations (1a).

14. Système de traitement d'informations (100) qui comprend une pluralité de dispositifs de traitement d'informations (1a, 1b, 1c),
dans lequel au moins un dispositif des dispositifs de traitement d'informations (1a, 1b, 1c) est un dispositif de traitement d'informations (1a) selon l'une quelconque des revendications 1 à 9,
dans lequel chaque dispositif de la pluralité de dispositifs de traitement (1a, 1b, 1c) comporte un hyperviseur respectif (11),
dans lequel une partie respective des machines de la pluralité de machines virtuelles (14) fonctionne sur chacun des hyperviseurs (11).

15. Système de traitement d'informations (100) selon la revendication 14,
dans lequel le dispositif de commande (3) est configuré pour découpler une mémoire virtuelle constituée par une pluralité de dispositifs mémoires physiques du dispositif de traitement d'informations (1a, 1b, 1c) lors d'une réception d'une notification mentionnant le fait que toutes les machines des machines virtuelles (14) ont arrêté de fonctionner en provenance du dispositif de traitement d'informations (1a).

16. Système de traitement d'informations (100) selon la revendication 14,
comprenant en outre au moins un dispositif de commande (3a, 3b) et au moins une alimentation sans coupure (2a, 2b),
dans lequel le dispositif de traitement d'informations (1a) est configuré pour notifier au dispositif de commande respectif (3a, 3b) le fait que toutes les machines des machines virtuelles (14) ont arrêté de fonctionner, et
le dispositif de commande respectif (3a, 3b) est configuré pour arrêter le dispositif de traitement d'informations correspondant (1a, 1b, 1c) et le dispositif d'alimentation sans coupure (2a, 2b) lors d'une réception d'une notification mentionnant le fait que toutes les machines des machines virtuelles (14) ont arrêté de fonctionner en provenance du dispositif de traitement d'informations correspondant (1a, 1b, 1c).

17. Système de traitement d'informations (100) selon la revendication 16,
dans lequel le dispositif de commande respectif (3a, 3b) est configuré pour découpler une mémoire virtuelle constituée par une pluralité de dispositifs mémoires physiques du dispositif de traitement d'informations (1a, 1b, 1c) lors d'une réception d'une notification mentionnant le fait que toutes les machines des machines virtuelles (14) ont arrêté de fonctionner en provenance du dispositif de traitement d'informations (1a).
